# EUROPEAN PATENT APPLICATION

(11) **EP 0 785 174 A1**
(43) Date of publication of application: **23.07.1997**
(21) Application number: 96870003.9
(22) Date of filing: 22.01.1996
(51) Int. Cl.: C04B 24/00, B02C 23/06, C04B 103/52

(54) **Use of triaminophosphonates in cement**

(71) Applicant: MONSANTO EUROPE S.A., B-1150 Brussels (BE); Holderchem Holding AG, 8050 Zürich (CH)
(72) Inventor: Zutterman, Freddy, B-5100 Wepion (BE); Suter, Willi, CH-5742 Kölliken (CH)
(74) Representative: Ernst, Hubert

(57) **Abstract**

Cement compositions are disclosed containing a narrowly defined triaminopolyphosphonate performance additive. These compositions exhibit a broad range of superior in-use properties, and thus allow the formulation of commercially viable cement executions having unusually low additive: dry cement weight ratios. The triaminophosphonates can be added during any stage of the cement manufacturing and/or use. In a preferred execution, the triaminopolyphosphonate are added during or before the cement and/or clinker grinding. So proceeding yields in addition to in-use prerformance benefits improved grinding and product flowability properties.

## Description

The present invention relates to the use of selected triaminophosphonates in cement, a process for grinding clinker in the presence of such selected aminophosphonates and to methods of using cement-based products, such as concretes, containing the triamino-phosphonates.

Aminopolyphosphonates are well-known and have found application in numerous applications, inclusive of building materials. The prior art phosphonates have been suggested for use in cement technology to thereby produce benefits, for example retarder properties. German patent application 20.37.586 discloses the use of especially aminodiphosphonic acids as a retarder in plastering compositions ; German Offenlegungsschrift 28.51.841 describes alkyldiphosphonic acids for use in burnt gypsum ; DE-A-34.10.820 divulges additives for cement and cement mortar comprising, inter alia, a phosphonic acid retardant. DE-OS-37.27.907 describes a process for the recovery of non-used concrete mixtures containing specific DEQUEST alkylaminopolymethylene phosphonic acids. DE-OS-40.38.147 pertains to an arrangement for the spraying of concrete containing a calcium binding stabilizer inclusive of specific DEQUEST species. Triaminononane-hexamethylenephosphonates having metal ion sequestering properties are known from Japanese patent Kokai N° 53-137886 to Asahi Chemical Industry Co, Ltd.

The known cement-phosphonate technology provides either narrowly defined benefits and/or is, from a commercial standpoint, marginally effective, and not likely to lead to commercially viable executions capable of providing a broad spectrum of benefits.

It has now been found that narrowly defined triaminophosphonates can serve as beneficially effective cement additives with a much better cost-performance ratio as compared to state-of-the art additives and will generate meaningful benefits with broad spectrum benefits.

The essential aminophosphonate component is a triaminoalkane polymethylenephosphonate represented by the general formula : 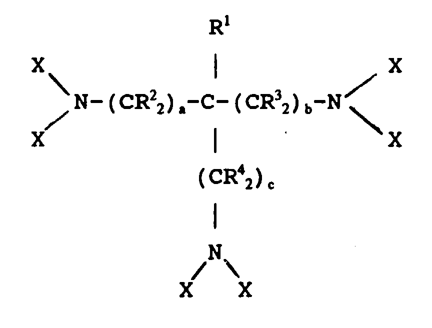 wherein X is H or CH₂PO₃M₂; M is hydrogen or a salt-forming cation; whereby at least one X on each individual N is CH₂PO₃M₂; a, b, and c are integers from 0 to 6 whereby, in any given formula, not more than one of said numbers a, b, and c can be equal to 0; each R¹, R², R³ and R⁴ is selected independently from H and C₁-C₆ alkyl; and the phosphonate is present in an amount of from 0,002% to 5% by weight of the dry cement.

The polyphosphonates of the present invention may be used as the corresponding acids or salts, more particularly the Na, K, Ca, ammonium or triethanolammonium salts.

Preferably, in the above general formula R¹ is hydrogen or C₁-C₂ alkyl; R², R³ and R⁴ are hydrogen and at least four of the X moieties are CH₂PO₃M₂. This triaminophosphonate is advantageously present in an amount of from 0,01% to 2% by weight of dry cement.

More preferably, R¹, R², R³ and R⁴ are hydrogen, a, b and c are, selected independently, such that their sum is an integer in the range from 6 through 10 and X is CH₂PO₃M₂. The triaminophosphonate is preferably present in an amount of from 0,01% to 1% by weight of the dry cement.

A very preferred triaminophosphonate compound herein is represented by 4-aminomethyl-1,8-diamino-octane N,N,N',N',N'',N'' hexakismethylene phosphonic acid or a salt thereof (TANHMP).

While the inventive triaminophosphonates can be used economically with cements broadly, such phosphonates are especially beneficial for use with cement having a C3A content of above 1%, preferably above 5%, most preferably from 8% to 12%.

The essential triaminophosphonates can be prepared by conventional phosphomethylation techniques starting from the corresponding amines with formaldehyde and phosphorous acid as, for example, described by Moedritzer and Irani, J. Org. Chem. 1966, vol 31, p. 1603.

The invention is also directed to a process for the grinding of clinker in the presence of additive to subadditive levels of a triaminophosphonate grinding additive of the above general formula. The phosphonate grinding additive represents preferably from 0,002 % to 2% by weight of the dry clinker (100 %). The grinding process according to the invention may include the specific use of 4-aminomethyl-1,8-diamino-octane N,N,N',N',N'',N'' hexakismethylene phosphonic acid or a salt thereof in an amount of 0,01% to 2% by weight of dry clinker.

According to another preferred embodiment of the invention, there is provided a cement composition containing a triaminophosphonate, as described above, in combination with from 0,01 % to 5% by weight of other phosphonated or non-phosphonated cement additives, with a view to achieve benefits and augment performance based on their art-established functionality. Examples of such additives embrace plasticizers, additional retarders and/or commercial non-phosphonated additives. In such systems, the triamino phosphonate represents from 0.001% to 2%, preferably from 0.02% to 1% expressed by weight of the dry cement or clinker. The triaminophosphonate additive and the sum of additives, other than the triamino phosphonate, are frequently utilized in a weight ratio of 5:95 to 80:20, preferably from 30:70 to 60:40.

The non-phosphonated additives, inclusive of grinding additives, can be selected routinely among non-phosphonated cement-additives and grinding-additives which additives are well known in the relevant domain. Typical examples of the like performance additives are : sodium chloride; lignosulfonate salts; naphthalenesulfonate salt; α- or β-poly-naphthalenesulfonates or the salts thereof; polycarboxylic acids and the salts thereof; anti-agglomerants such carbon black (soot); finely divided carbon black having a particle diameter between 1 and 80 micrometers; salts of di-, and tri-ethanolamines; carboxylic acids or the salts thereof; acetone; polyglycols and polysaccharides. Suitable and preferred phosphonate additives other than the essential triaminophosphonates can be represented by the species recited in EP-A-95870120.3 passage page 4, line 18 through page 6, line 5. The addition of, for example, additif system of this invention to cement and/or clinker can be effected with the aid of dosing techniques routinely available.

Cement and clinker compositions in accordance with this invention can contain, in addition to the additives recited above, other additifs in levels not exceeding normally 7% by weight of the dry cement or clinker. Well-known examples of the like further additives are : gypsum (calcium sulfate), calcium hemihydrates, calcium anhydride and phosphogypsum.

### Examples

The benefits of the invention herein are illustrated by means of the comparative showings below.

Set retardation was measured by preparing mortar samples to which a sodium phosphonate salt was added at a level equivalent to 0.05% of phosphonic acid on the dry cement weight. The water/cement weight ratio was 0.48 and the sand/cement weight ratio was 0.75.

Two types of Portland cement were used. Cement 1 is a cement having a C3A content of about 9%; cement 2 is low C3A (1%) cement. Set retardation was determined in a conventional manner by measuring the temperature of the mortar as a function of time. The testing results quantify the time needed to reach maximum temperature. These measurements correlate well with and are directly relatable to the setting time.

The comparative testing results were as follows :

| | Example | |
|---|---|---|
| | I | II |
| Phosphonate | Time to maximum temperature (hr) | |
| | Cement 1 | Cement 2 |
| none | 10.5 | 11.8 |
| ATMP | 16.3 | 18.7 |
| HEDP | 22.8 | 16.2 |
| DTPMP | 17.3 | 15.7 |
| PBTC | 13.8 | 14.2 |
| TANHMP | 33.0 | 18.0 |

The phosphonate abbreviations have the following meaning; the partially neutralized sodium salts are used.
- ATMP: : amino N,N,N tris(methylene phosphonic acid);
- HEDP: : 2-hydroxy ethane-1,1-diphosphonic acid;
- DTPMP: : diethylene triamine N,N,N',N'',N'' pentakis (methylenephosphonic acid);
- PBTC: : 2-phosphono butane 1,2,4 tricarboxylic acid;
- TANHMP: : 4-aminomethyl-1,8-octanediamine-N,N,N',N',N'',N'' hexakis(methylene phosphonic acid).

The results are confirmatory of unusually beneficial improvements conferred by the use of the narrowly defined triaminopolyphosphonates of this invention as compared to structurally closely related polyphosphonate species.

### Example III

Set retardation was measured as described in examples I and II above.

The cement used contained 10% C3A and about 11% C2S, and 69% C3S :

The experimental results were as follows :

| Phosphonate | Time to max temperature (hr) |
|---|---|
| NONE | 10.7 |
| ATMP | 21.7 |
| HEDP | 26.8 |
| DTPMP | 25.7 |
| PBTC | 15.8 |
| TANHMP | 32.2 |

The testing results show that the use of the essential triaminophosphonates in cement having C3A level in the range of from 8% to 12% can constitute a preferred domain of application.

## Claims

1. A cement composition containing a polyaminopolymethylene phosphonate performance additive characterized in that the phosphonate is a triaminophosphonate having the following general formula : 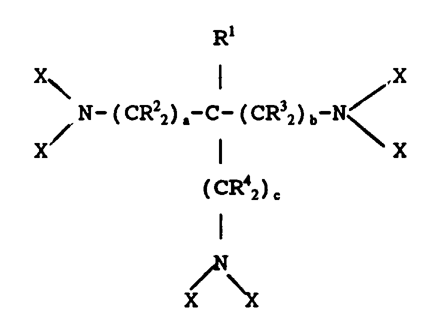 wherein X is H or CH₂PO₃M₂; M is hydrogen or a salt-forming cation; whereby at least one X on each individual N is CH₂PO₃M₂; a, b, and c are integers from 0 to 6 whereby, in any given formula, not more than one of said numbers a, b, and c can be equal to 0; each R¹, R², R³ and R⁴ is selected independently from H and C₁-C₆ alkyl; and the phosphonate is present in an amount of from 0,002% to 5% by weight of the dry cement.

2. The composition in accordance with claim 1 wherein R¹ is hydrogen or C₁-C₂ alkyl; R², R³ and R⁴ are hydrogen and at least four of the X moieties are CH₂PO₃M₂.

3. The composition in accordance with claim 2 wherein the triaminophosphonate is present in an amount of from 0,01% to 2% by weight.

4. The composition in accordance with claim 3 wherein R¹, R², R³ and R⁴ are hydrogen, a, b and c are, selected independently, such that their sum is an integer in the range from 6 to 10 and X is CH₂PO₃M₂.

5. The composition in accordance with claim 4 wherein the triaminophosphonate is present in an amount of from 0,01% to 1% by weight.

6. The composition in accordance with any one of claims 1 to 6 wherein the triaminophosphonate is 4-aminomethyl-1,8-diamino-octane N,N,N',N',N'',N'' hexakismethylene phosphonic acid or a salt thereof.

7. The composition in accordance with any preceding claims wherein the cement has a C3A content of 5% to 12%.

8. A process for the grinding of clinker in the presence of a grinding additive wherein a polyaminophosphonate of the general formula of claim 1 is used in an amount of 0,002% to 2% by weight expressed versus the dry clinker (100%).

9. The process of Claim 8 wherein R¹ is hydrogen or C₁-C₂ alkyl; R², R³ and R⁴ are hydrogen and at least four of the X moieties are CH₂PO₃M₂, and the triaminophosphonate is present in an amount of from 0,01% to 2% by weight.

10. The process of Claim 8 or 9 wherein the triaminophosphonate is 4-aminomethyl-1,8-diamino-octane N,N,N',N',N'',N'' hexakismethylene phosphonic acid or the salt thereof in an amount of 0,01% to 2% by weight.

11. A cement composition containing a triaminophosphonate in accordance with claim 1 in combination with from 0.01% to 5% by weight of other phosphonated or non-phosphonated cement additives.
